# EUROPEAN PATENT APPLICATION

(11) **EP 2 267 703 A1**
(43) Date of publication of application: **29.12.2010**
(21) Application number: 09305531.7
(22) Date of filing: 11.06.2009
(51) Int. Cl.: G11B 7/0065, G03H 1/02

(54) **Phase mask for a holographic storage system**

(71) Applicant: Thomson Licensing, 92130 Issy-les-Moulineaux (FR)
(72) Inventor: Knittel, Joachim, 78532 Tuttlingen (DE); Przygodda, Frank, 78050 Villingen-Schwenningen (DE)
(74) Representative: Schmidt-Uhlig, Thomas

(57) **Abstract**

The present invention relates to a phase mask (13) for use in a holographic storage system (1), and to an apparatus (1) for reading from and/or writing to holographic storage media (10), which makes use of such a phase mask (13) for optimizing the intensity distribution of a reference beam (5).

According to the invention, the phase mask (13) has a plurality of phase cells (131, 132), each phase cell (131, 132) being adapted to introduce one of at least a first and a second phase shift. The phase cells (131, 132) are arranged in an essentially random-like order with a pronounced high frequency content.

## Description

The present invention relates to a phase mask for use in a holographic storage system, and to an apparatus for reading from and/or writing to holographic storage media, which makes use of such a phase mask for optimizing the intensity distribution of a reference beam.

In holographic data storage digital data are stored by recording the interference pattern produced by the superposition of two coherent laser beams, where one beam, the so-called 'object beam', is modulated by a spatial light modulator and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recording. This results in the reconstruction of the recorded object beam.

One advantage of holographic data storage is an increased data capacity. Contrary to conventional optical storage media, the volume of the holographic storage medium is used for storing information, not just a few layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. This allows to achieve increased data rates in addition to the increased storage density. The data page is imprinted onto the object beam by the spatial light modulator (SLM) and detected with a detector array.

Typically the data pages are stored in or near the Fourier plane and thus the frequency components of the data page are stored in different locations of the hologram. Low frequency components are usually located near the center of the Fourier plane, whereas high frequency components are located more distant from the center of the Fourier plane. To avoid a distortion of the frequency spectrum of the data page the intensity distribution of the reference beam in the Fourier plane should be essentially homogeneous. Otherwise, the spectrum of the stored data pages is modulated by the reference beams intensity distribution. This distortion degrades the image quality of the retrieved data pages and ultimately leads to an increased bit error rate.

EP 2 028 653 proposes to include a phase mask in the optical path of the reference beam in order to flatten the intensity distribution of the reference beam and to ensure a good overlap of the object beam and the reference beam inside the holographic storage medium.

It is an object of the present invention to propose a improved solution for obtaining a homogeneous intensity distribution of the reference beam in the Fourier plane.

According to the invention, this object is achieved by a phase mask for a holographic storage system, with a plurality of phase cells, each phase cell being adapted to introduce one of at least a first and a second phase shift, wherein the phase cells are arranged in an essentially random-like order with a pronounced high frequency content. The pronounced high frequency content leads to a more homogeneous intensity distribution of the reference beam in the Fourier plane when the phase mask is included in the reference beam path of a holographic storage system.

Advantageously, the phase mask is ring-shaped. A ring-shaped phase mask is especially advantageous for a holographic storage system with a coaxial arrangement of a reference beam and an object beam or a reconstructed object beam. In such a system the reference beam usually is an annular beam surrounding the object beam. With a ring-shaped phase mask it is thus possible to imprint the desired phase distribution on the reference beam only.

Preferably, each phase cell is adapted to introduce a phase shift of either '0' or 'π'. This means that the phase mask is a binary phase mask, which has the advantage that designing and manufacturing of the phase mask is relatively easy. Of course, it is likewise possible to use a multi-level or grey-level phase mask. In this case the resulting intensity distribution in the Fourier plane is adjustable more precisely. However, the complexity of the designing process is increased.

The phase mask is not necessarily a passive optical element. Advantageously, the phase mask consists of a phase spatial light modulator. This allows to modify the phase distribution generated by the phase mask. One possibility to realize the phase spatial light modulator is to combine a polarization-state modifying spatial light modulator, e.g. an LCOS (Liquid Crystal on Silicon) type spatial light modulator, with a half wave plate. The half-wave plate converts the polarization state of the pixels into a phase pattern.

According to a further aspect of the invention, a method for designing the proposed phase mask has the steps of:
- modifying a random phase mask by changing the phase shift of randomly selected phase cells;
- calculating an intensity distribution resulting from the modified phase mask in the focus of an objective lens;
- comparing the resulting intensity distribution with a desired intensity distribution;
- in case the intensity distribution has not improved, undoing the modification of the phase mask and starting a new modifying step; and
- in case the intensity distribution has improved, starting a further modifying step until the intensity distribution meets predetermined requirements.

The method allows to easily determine the order of the phase cells that is necessary to achieve the desired homogeneous intensity distribution in the Fourier plane.

According to still a further aspect of the invention, an apparatus for reading from and/or writing to holographic storage media includes the proposed phase mask in an optical path of a reference beam. Such an apparatus has the advantage that a more homogeneous intensity distribution of the reference beam is achieved in the Fourier plane, i.e. at the position of a hologram. This in turn leads to an improved image quality of the retrieved data pages and ultimately to a reduced bit error rate.

Preferably, the apparatus has a counter propagating arrangement of the reference beam and an object beam or a reconstructed object beam. Such a beam arrangement allows to easily implement the proposed phase mask in the optical path of the reference beam.

Alternatively, the apparatus has a coaxial arrangement of the reference beam and the object beam or the reconstructed object beam. Such an apparatus has the advantage that the optical setup is less complicated, as it is used with a reflection-type holographic storage medium. In this case all optical component are located on the same side of the holographic storage medium. Favorably, the reference beam is an annular beam surrounding the object beam. In this way a symmetric superposition of the object beam and the reference beam inside the holographic storage medium is achieved.

Preferably, the phase spatial light modulator consists of a polarization-state modifying spatial light modulator and a half wave plate with a center hole for converting the polarization state of the pixels of the reference beam into a phase pattern. In this way a single spatial light modulator can be used for generating both the object beam and the reference beam with the desired phase distribution. The object beam, on the one hand, passes through the center hole of the half-wave plate. The reference bam, on the other hand, passes through the half-wave plate, which converts the polarization distribution into a phase distribution. A further polarizing beam splitter then allows to remove light of a certain polarization from the object beam, so that the polarization distribution of the object beam is changed into a distribution of bright and dark pixels.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: shows a part of a holographic storage system including a conventional binary phase mask for the reference beam,
- Fig. 2: shows the intensity distribution in the Fourier plane resulting from the conventional binary phase mask,
- Fig. 3: shows the intensity distribution in the Fourier plane resulting from a phase mask according to the invention,
- Fig. 4: schematically depicts a method for designing the phase mask according to the invention,
- Fig. 5: shows an exemplary phase mask according to the invention,
- Fig. 6: depicts a normal random phase mask for comparison,
- Fig. 7: illustrates a counter-propagating holographic storage system including a phase mask according to the invention,
- Fig. 8: shows a simulation of a retrieved data page for the case of a conventional random phase mask,
- Fig. 9: shows a simulation of a retrieved data page for the case of a phase mask according to the invention,
- Fig. 10: illustrates a coaxial holographic storage system including a phase mask according to the invention,
- Fig. 11: shows a typical data page used in a coaxial holographic recording system, and
- Fig. 12: depicts a special half wave plate with a center hole for use in the coaxial holographic recording system.

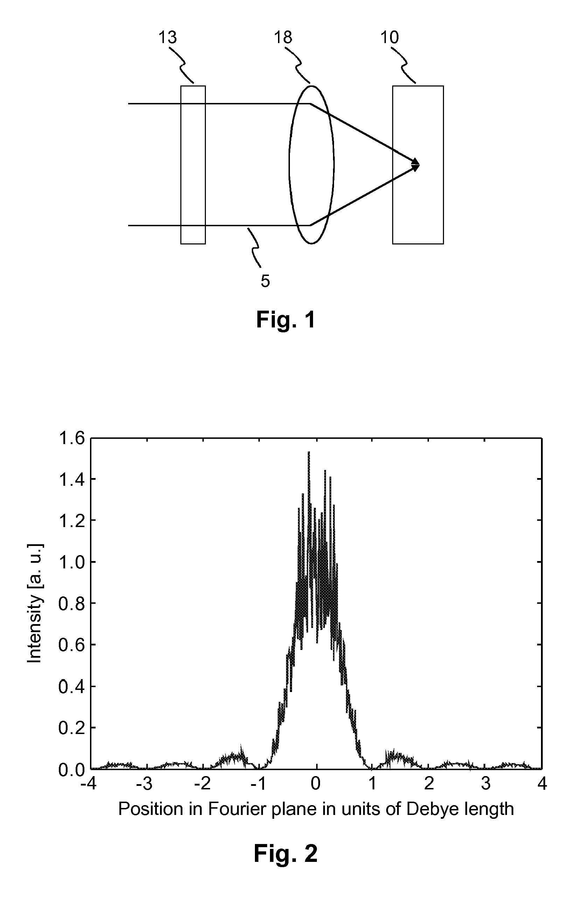

Fig. 1 shows a part of a holographic storage system. A collimated reference beam 5 is focused into a holographic storage medium 10 by an objective lens 18 after passing a binary phase mask 13. The binary phase mask 13 consists of phase cells, which introduce phase shifts of either 0 or π to the wavefront of the reference beam 5.

The resulting intensity distribution in the Fourier plane is shown in Fig. 2 for a conventional random binary phase mask 13. As can be seen the envelope of the intensity distribution corresponds essentially to the squared Fourier transform of a single pixel, i.e. a 2-dimensional Sinc² function.

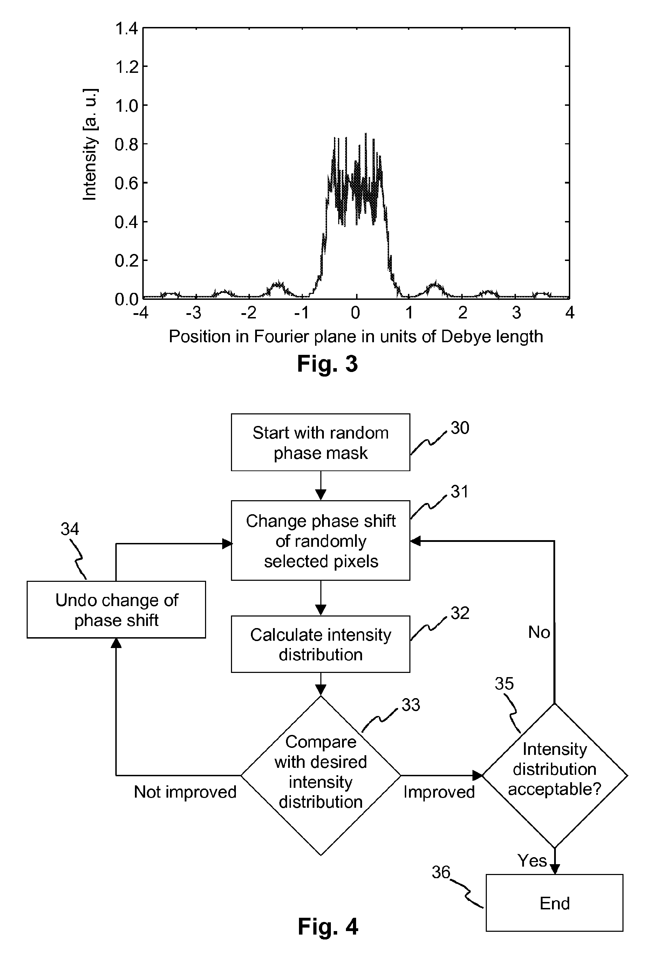

In order to achieve a homogeneous intensity distribution in the Fourier plane, the invention proposes a specially designed phase mask 13. The phase mask 13 is characterized by a special order of the phase cells that introduce 0 and π phase shifts. The order of the phase cells is random-like but features a spectrum, whose high frequency content is more pronounced than the one of a conventional random phase mask. The resulting intensity distribution in the Fourier plane is shown in Fig. 3. From Fig. 3 it is apparent that the phase mask 13 according to the invention improves the homogeneity of the intensity distribution in the Fourier plane. Of course, the invention is not limited to a binary phase mask 13. It is likewise possible to use a grey-level phase mask, i.e. a phase mask with more than two distinct phase shifts. In addition, the phase mask 13 is not necessarily a passive optical element. It may likewise consist of a phase spatial light modulator. One possibility to realize a phase spatial light modulator is to combine a polarization-state modifying spatial light modulator with a half wave plate. The half-wave plate converts the polarization state of the pixels into a phase pattern.

A method for designing the phase mask according to the invention is schematically depicted in Fig. 4. The method starts 30 with a conventional random phase mask. In a first step 31 the phase shift of randomly selected pixels is changed from 0 to π or vice versa. Subsequently the resulting intensity distribution in the focus of the objective lens is calculated 32. This resulting intensity distribution is then compared 33 with the desired intensity distribution in order to determine whether the intensity distribution has improved. If this is not the case, the changes made in the first step 31 are undone 34 and the method returns to the first step 31. If, however, the intensity distribution has improved, it is determined 35 whether the intensity distribution is satisfactory. If this is the case, the method is terminated 36. Otherwise the method returns to the first step 31 to further modify the order of the phase cells.

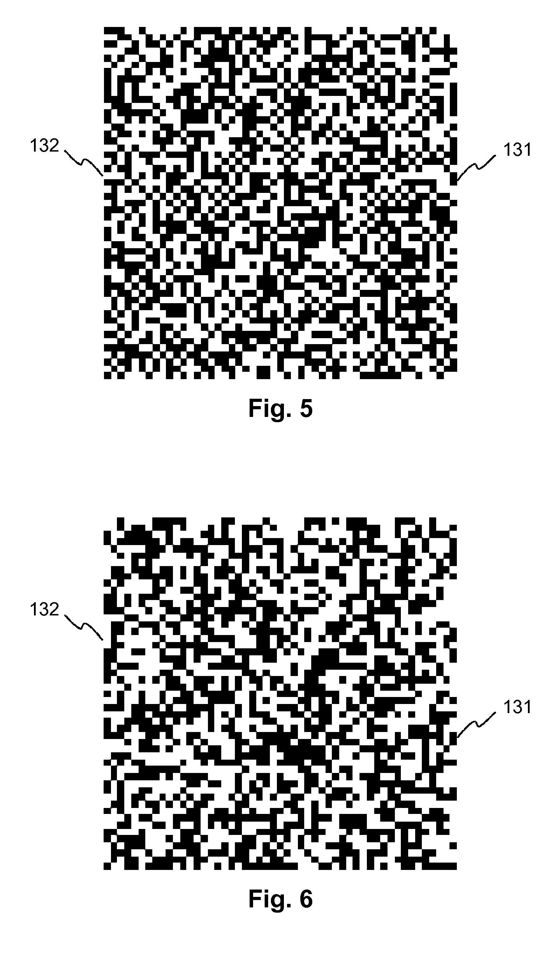

An exemplary distribution of phase cells 131, 132 of a phase mask 13 according to the invention is depicted in Fig. 5. A typical distribution of phase cells 131, 132 of a normal random phase mask is illustrated in Fig. 6 for comparison. In the figures, the black phase cells 131 represent a phase shift of 0, whereas the white phase cells 132 represent a phase shift of π. As can be seen, the phase mask 13 according to the invention features a larger number of regions with a checkerboard-like distribution of phase cells 131, 132 compared to a conventional random phase mask. This is due to the fact that a checkerboard-like pattern represents the highest spatial frequency.

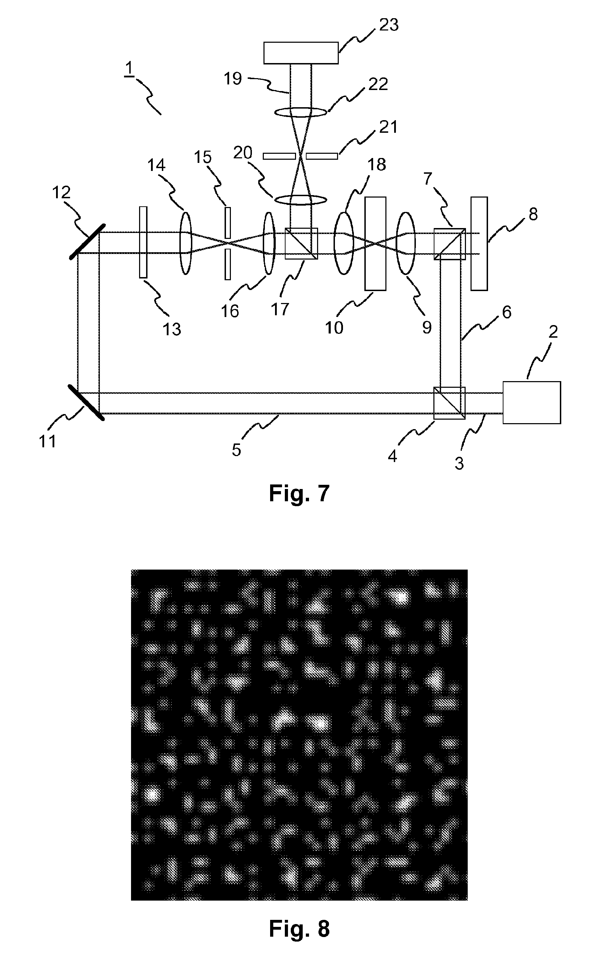

Fig. 7 illustrates a counter-propagating holographic storage system 1 including a phase mask 13 according to the invention. A light source 2 emits a light beam 3, which is split by a first beam splitter 4 into a reference beam 5 and an object beam 6. For writing, the object beam 6 is directed by a second beam splitter 7 onto a reflective spatial light modulator 8, which imprints a data page, i.e. a data pattern, onto the object beam 6. The reflected object beam 6 passes through the second beam splitter 7 and is focused by a first objective lens 9 into a holographic storage layer of a holographic storage medium 10. The reference beam 5 is directed towards the holographic storage medium by two mirrors 11, 12. Before being focused into the holographic storage layer of the holographic storage medium 10 by a second objective lens 18, the reference beam passes a phase mask 13 according to the invention and a spatial filter consisting of two lenses 14, 16 and a filter aperture 15. Due to the interference between the object beam 6 and the reference beam 5 a hologram is recorded in the holographic storage layer of the holographic storage medium 10.

For reading a hologram located in the holographic storage layer of the holographic storage medium 10, the hologram is illuminated with the reference beam 5 only. The resulting reconstructed object beam 19 is collimated by the second objective lens 18 and directed onto an array detector 23, e.g. a CCD camera, by a third beam splitter 17. Before it impinges on the array detector, the reconstructed object beam 19 passes through a further spatial filter consisting of two lenses 20, 22 and a filter aperture 21.

In the counter-propagating holographic setup, the focused reference beam 5 and the focused object beam 6 fully overlap in the holographic medium 10. The holographic storage medium 10 is situated between two objective lenses 9, 18. Therefore, the data page is recorded in the Fourier plane of the spatial light modulator 8. This means that different frequency components of the data page are recorded at different locations. The phase mask 13 according to the invention leads to a more homogenous intensity distribution of the focused reference beam 5, which improves the writing process, i.e. the image quality of the recorded holograms.

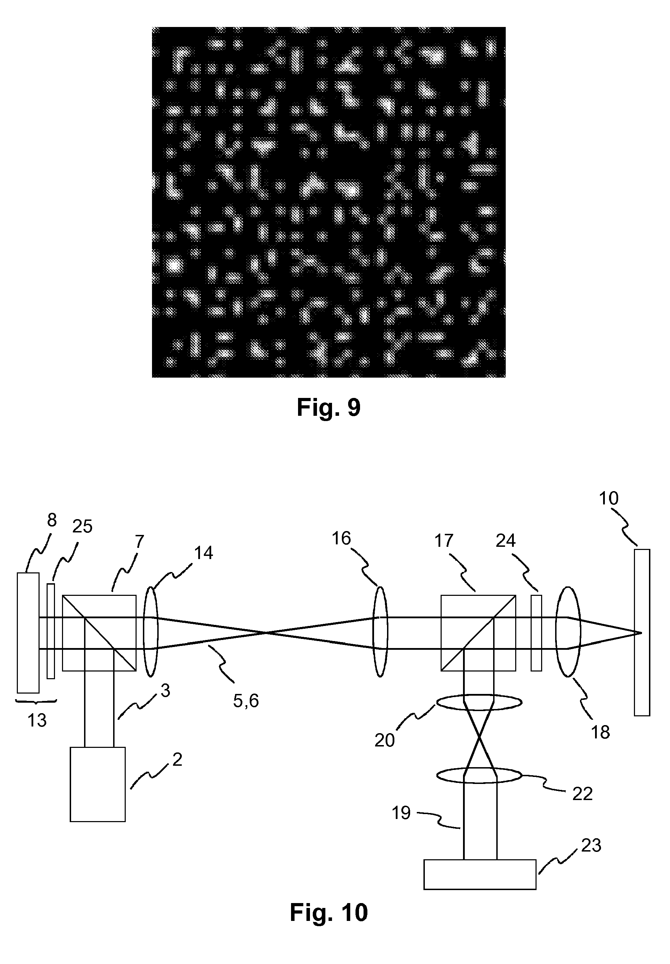

A typical retrieved data page is shown in Fig. 8 for the case of a conventional random phase mask and in Fig. 9 for the case of a phase mask 13 according to the invention. The pixels of the retrieved data page using the specially designed phase mask 13 are very clear compared to the pixels of Fig. 8. The data page of Fig. 8 is low-pass filtered by the holographic recording process, as the intensity of the reference beam 5 is low at the location of the high frequency components of the data page. The high frequency components are situated distanced from the center, of the Fourier plane, where the intensity of the reference beam 5 is low (compare Fig. 2). As a result, the retrieved data page appears blurry.

To store and retrieve data pages with high quality, it is advantageous if all frequency components of the data page are stored and retrieved without significant distortion of the frequency spectrum. As a consequence, the signal to noise ratio with the phase mask 13 according to the invention is higher than the signal to noise ratio with the conventional random phase mask. The simulations yield a signal to noise ratio of 4.7 for the conventional random phase mask and of 7.6 for the specially designed phase mask 13.

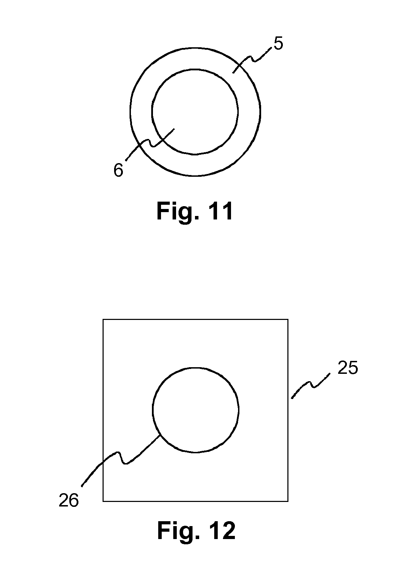

The phase mask 13 according to the invention can also be employed in a coaxial holographic storage system. This is schematically illustrated in Fig. 10. Details on coaxial holographic storage systems can be found, for example, in K. Tanaka et al.: "Improved performance in coaxial holographic data recording", Opt. Exp. Vol. 15 (2007), pp. 16196-16209. A light source 2 generates a light beam 3, which is directed towards a spatial light modulator 8 by a polarizing beam splitter 7. The spatial light modulator 8 is a polarization-state modifying spatial light modulator, e.g. an LCOS (Liquid Crystal on Silicon) type spatial light modulator, and generates both a reference beam 5 and an object beam 6, where the reference beam 5 is an annular beam surrounding the object beam 6. A corresponding data page is shown in Fig. 11. The data page consists of a central pixel pattern for the object beam 6 and an annular pixel pattern for the reference beam 5. Located before the spatial light modulator 8 is a special half wave plate 25, whose function will be explained below in more detail. The image on the spatial light modulator 8 is imaged via two 4f imaging lenses 14, 16 and a quarter-wave plate 24 to an objective lens 18 and focused into a holographic storage layer of a holographic storage medium 10. During readout only the reference beam illuminates the holographic storage medium 10 and the data is read out via a further polarizing beam splitter 17, two further 4f imaging lenses 20, 22 and an array detector 23.

The special half wave plate 25 is depicted in more detail in Fig. 12. The idea is to use an annular shaped phase mask for optimizing the intensity distribution in the holographic storage layer of the holographic storage medium 10. In this system the phase mask is realized with the help of the annular shaped pixel pattern of the reference beam 5. By placing a halve-wave plate 25 that has a center hole 26 corresponding to the diameter of the object pixel pattern in front of the polarization-state modifying spatial light modulator 8, the spatial light modulator 8 works like a phase spatial light modulator in the zone of the reference pixel pattern. In order to achieve a homogeneous intensity distribution, the settings of the pixels in the zone of the reference pixel pattern have to be set according to the algorithm described in connection with Fig. 4.

As an alternative to the use of the polarization-state modifying spatial light modulator 8 in combination with the special halve-wave plate 25, it is likewise possible to use an amplitude SLM (either reflective or transmissive) in combination with a ring-shaped phase mask. In this case the ring-shaped phase mask is arranged such that it imprints a phase distribution on the reference beam (5) only. The phase cells of the phase mask are again designed in accordance with the algorithm described in connection with Fig. 4.

## Claims

1. Phase mask (13) for a holographic storage system (1), with a plurality of phase cells (131, 132), each phase cell (131, 132) being adapted to introduce one of at least a first and a second phase shift, **characterized in that** the phase cells (131, 132) are arranged in an essentially random-like order with a pronounced high frequency content.

2. Phase mask (13) according to claim 1, **wherein** the phase mask (13) is ring-shaped.

3. Phase mask (13) according to claim 1 or 2, **wherein** each phase cell (131, 132) is adapted to introduce a phase shift of either '0' or 'π'.

4. Phase mask (13) according to one of claims 1 to 3, **wherein** the phase mask (13) is realized by a phase spatial light modulator (8, 25).

5. Phase mask (13) according to claim 4, **wherein** the phase spatial light modulator (8, 25) consists of a polarization-state modifying spatial light modulator (8) and a half-wave plate (25).

6. Method for designing a phase mask (13) according to one of claims 1 to 5, **having** the steps of:
- modifying a random phase mask by changing (31) the phase shift of randomly selected phase cells (131, 132);
- calculating (32) an intensity distribution resulting from the modified phase mask in the focus of an objective lens;
- comparing (33) the resulting intensity distribution with a desired intensity distribution;
- in case the intensity distribution has not improved, undoing (34) the modification of the phase mask and starting a new modifying step; and
- in case the intensity distribution has improved, starting a further modifying step until the intensity distribution meets predetermined requirements.

7. Apparatus (1) for reading from and/or writing to holographic storage media (10), **characterized in that** it includes a phase mask (13) according to one of claims 1 to 5 in an optical path of a reference beam (5).

8. Apparatus according to claim 7, **wherein** the apparatus has a counter propagating arrangement of the reference beam (5) and an object beam (6) or a reconstructed object beam (19).

9. Apparatus (1) according to claim 7, **wherein** the apparatus has a coaxial arrangement of a reference beam (5) and an object beam (6) or a reconstructed object beam (19).

10. Apparatus according to claim 9, **wherein** the reference beam (5) is an annular beam surrounding the object beam (6).

11. Apparatus according to claim 10, **wherein** the phase mask (13) consists of a polarization-state modifying spatial light modulator (8) and a half wave plate (25) with a center hole (26) for converting the polarization state of the pixels of the reference beam (5) into a phase pattern.
